# EUROPEAN PATENT APPLICATION

(11) **EP 4 353 076 A1**
(43) Date of publication of application: **17.04.2024**
(21) Application number: 22201151.2
(22) Date of filing: 12.10.2022
(51) Int. Cl.: A01G 25/16

(54) **IRRIGATION SYSTEM**

(71) Applicant: Concare GmbH, 72160 Horb am Neckar (DE)
(72) Inventor: Zehnder, Hans, 72160 Horb am Neckar (DE)
(74) Representative: Meyer zu Bexten, Elmar

(57) **Abstract**

**Problem**

Water shortage in cemeteries leads to difficult working conditions especially for cemetery gardeners and grave keepers. For larger companies it is important to know at which locations (cemeteries) which graves need water and which do not. Sometimes gardeners must bring water tanks with them because cemeteries no longer provide water to professional grave caretakers.

**Solution**

System for irrigating organic soil on a gravesite, the system having
a water tank,
characterized in
sensors for measuring a fill level of the tank and humidity of the soil,
an electronic control unit for acquiring values measured by the sensors, and
a transmission unit for reporting the values to a caretaker.

## Description

### Technical Field

The invention pertains to the product and processes as per the first portion of the independent claims.

### Background Art

PTL1 relates to a receptacle for cultivating and preserving plants especially adapted and designed for use in cemeteries and intended to be set into the earth (to come flush or level with the top surface thereof) and to be placed directly over the grave containing the casket and rest on top of the earth which has just been placed on said casket. The receptacle consists of an upper chamber or compartment, adapted to receive the bed of earth in which the plants are grown and cultivated, and a lower compartment or basin, which receives and holds a supply of water used to nurture the plants automatically.

NPL1 gives an account of the state of the art in automatic irrigation technology.

### Summary of invention

The invention as claimed is hereinafter disclosed in such a way that the technical problem with which it deals can be appreciated and the solution can be understood.

### Technical Problem

Water shortage in cemeteries leads to difficult working conditions especially for cemetery gardeners and grave keepers. For larger companies it is important to know at which locations (cemeteries) which graves need water and which do not. Sometimes gardeners must bring water tanks with them because cemeteries no longer provide water to professional grave caretakers.

### Solution to Problem

The problem is solved by a smart irrigation system as per Claim 1.

### Advantageous effect of invention

Based on data provided by the system, the caretaker can optimize resources and fill only those systems with water that indicate demand. The invention sustainably resolves municipal water supply and distribution issues arising within cemeteries as well as urban gardening or planting areas, potentially saving millions of liters of precious and expensive drinking water every year.

### Description of embodiments

A system is proposed consisting of an electronic control unit that reads and stores the values from the sensors and transmits them wirelessly to a mobile device/mobile phone/web server. Additional data, e.g., from weather forecasts can be used. The system autonomously regulates the power supply from the solar cells and the rechargeable battery and, if necessary, sends faults to the caretaker so that the planting is prevented from drying out and damage is prevented. In particular, the system signals the battery status, the current water level, and the moisture of the soil to the supervisor and shows him this data per irrigation system and per cemetery. Based on this data, the supervisor can optimize resources and fill only those systems with water that show a need. The systems communicate with each other and with the Internet. Individual systems serve as repeaters for transmission to the transmitting unit on the Internet. In case of non-reporting there is a fault message. The system is interchangeably installed in a grave lantern which invisibly also contains the radio antenna. Furthermore, a billing system based on the replenishment intervals is provided to calculate the maintenance costs. Image data from an optional camera can also be recorded for control/for the customer.

The acquired sensor data may be evaluated in numerous ways, such as to optimize the walking path for filling up the systems or generate a traffic light signal of the water level prompting the caretaker to refill the system urgently (red), at the next watering cycle (yellow), or on occasion (green). Further, the system may store an optimized schedule for watering time planning and employee deployment. Finally, it may take the form of an open system wherein gardeners can integrate and account for systems of colleagues or private customers, e.g., in case of vacation.

### Industrial applicability

The invention is applicable, inter alia, for grave or tray irrigation, urban gardening or planting areas, facade or roof greening, planting walls, and agriculture.

### Citation list

The following documents are cited hereinbefore.

### Patent literature

PTL1: US 665502 A (BOGGS ALDEN B [US]) 08.01.1901

### Non-patent literature

NPL1: ROMERO, R., et al. Research on automatic irrigation control: State of the art and recent results. Agricultural water management. 2012, vol.114, p.59-66.

## Claims

1. System for irrigating organic soil on a gravesite, the system having
a water tank,
**characterized in**
sensors for measuring a fill level of the tank and humidity of the soil,
an electronic control unit for acquiring values measured by the sensors, and a transmission unit for reporting the values to a caretaker.

2. System as per Claim 1, further comprising
a photovoltaic cell for mounting atop the gravesite and supplying the system with electric energy.

3. System as per Claim 2, further comprising
a light fixture, such as a grave lantern, supporting the photovoltaic cell and transmission unit.

4. System as per Claim 2 or Claim 3, further comprising
a rechargeable battery, wired to the photovoltaic cell, for temporarily storing the energy, wherein the sensors are further configured to measure a state of charge of the battery.

5. System as per Claim 4, configured to
store and wirelessly transmit the values to an Internet server such as a webserver or to a mobile device such as a cellular phone.

6. System as per Claim 4 or Claim 5, configured to
autonomously control supply of the energy from the photovoltaic cell and battery using additional data such as from weather forecasts.

7. System as per Claim 4, Claim 5, or Claim 6, configured to
display the humidity, state of charge, and fill level of the system and per cemetery.

8. System as per any of the preceding claims, configured to
report malfunctions to the caretaker.

9. System as per any of the preceding claims, configured to
communicate with peer systems serving as repeaters.

10. System as per any of the preceding claims, further comprising
a billing system based on replenishment intervals for calculating maintenance cost.

11. System as per any of the preceding claims, further comprising
a camera for capturing image data, such as for monitoring by a client of the caretaker.

12. System as per any of the preceding claims wherein
the sensors comprise a voltmeter for measuring electric conductivity of the soil, such as caused by fertilizing.

13. System as per any of the preceding claims wherein
the sensors comprise a thermometer for guarding against frost, such as during spring and fall.
